# FASCICULE DE BREVET EUROPEEN

(11) **EP 1 242 839 B1**
(45) Date de publication et mention de la délivrance du brevet: **09.02.2005**
(21) Numéro de dépôt: 00988889.2
(22) Date de dépôt: 07.12.2000
(51) Int. Cl.: G02B 6/44

(54) **FIBRE OPTIQUE ET CABLE A FIBRE OPTIQUE COMPRENANT AU MOINS UN ELEMENT INTERMETALLIQUE ABSORBANT L'HYDROGENE**
OPTISCHE FASER UND OPTISCHES KABEL MIT MINDESTENS EINEM INTERMETALLISCHEN ABSORBIERENDEN ELEMENT
OPTICAL FIBRE AND FIBRE-OPTIC CABLE COMPRISING AT LEAST ONE INTERMETALLIC ELEMENT THAT ABSORBS HYDROGEN

(30) Priorité: 22.12.1999 FR 9916864
(43) Date de publication de la demande: 25.09.2002
(73) Titulaire: ALCATEL, 75008 Paris (FR)
(72) Inventeur: ANDRIEU, Xavier, F-91220 Brétigny-sur-Orge (FR); DECAUMONT, Anne, F-91220 Brétigny-sur-Orge (FR); KNOSP, Bernard, F-92250 La Garenne Colombes (FR)
(74) Mandataire: Blokland, Arie
(86) Numéro de dépôt international: PCT/FR2000/003425
(87) Numéro de publication internationale: WO 2001/046736

(56) Documents cités:
- EP-A- 0 552 790
- EP-A- 0 718 654
- GB-A- 1 572 796
- GB-A- 2 144 878
- US-A- 4 696 543
- US-A- 4 718 747
- PATENT ABSTRACTS OF JAPAN vol. 013, no. 107 (C-576), 14 mars 1989 (1989-03-14) & JP 63 282226 A (JAPAN STEEL WORKS LTD:THE), 18 novembre 1988 (1988-11-18)

## Description

La présente invention concerne une fibre optique comprenant un composé intermétallique pour l'absorption d'hydrogène. La présente invention concerne aussi un câble à fibre optique comprenant un tel composé intermétallique pour l'absorption d'hydrogène.

La fibre optique elle-même comprend une partie guidante comprenant de la silice éventuellement dopée, et est revêtue le plus souvent par un revêtement primaire et éventuellement un revêtement secondaire, généralement en polymère, pour la protéger de son environnement. Une telle fibre revêtue est le plus souvent destinée à être incluse dans un câble de transmission de données. Un câble à fibre optique, utilisé pour la transmission de données, est un câble comprenant au moins une fibre optique, incluse dans un logement, qui peut être en partie métallique ou plastique, ledit câble pouvant en outre comprendre des éléments de renfort de traction ou d'autres éléments métalliques tels par exemple des armures ou des revêtements.

Le problème de l'atténuation de la transmission du signal optique due à l'absorption de l'hydrogène par le réseau de la silice des fibres optiques est connu. Ainsi par exemple le brevet US-A-4.718.747 propose une solution qui consiste à introduire un élément ou un alliage d'éléments ou un composé intermétallique d'éléments des groupes III, IV, V et VIII du tableau périodique dans une structure de fibre optique ou de câble à fibre optique. Lesdits éléments sont de préférence les lanthanides pour le groupe III, le titane, le zirconium et le hafnium pour le Groupe IV, le vanadium, le niobium et le tantale pour le Groupe V, et le palladium pour le Groupe VIII, et de façon encore plus préférée ces éléments sont le lanthane, le zirconium, le hafnium, le vanadium, le niobium, le tantale ou le palladium. Le palladium est l'élément qui a été le plus utilisé en pratique. Le brevet GB 2 144 878 divulgue également l'utilisation de composants intermétalliques cristallins pour réduire la migration de l'hydrogène dans une fibre optique.

Or une telle solution implique l'utilisation de métaux qui sont très coûteux, dont l'exemple le plus connu est le palladium (Pd). D'autre part, les composés obtenus à partir des groupes III, IV et V sont facilement pollués par d'autres gaz (tels que le dioxyde de carbone CO₂, le monoxyde de carbone CO ou l'oxygène O₂) et donc éventuellement très peu réactifs à l'hydrogène après pollution. Par suite, ils sont difficilement utilisables en particulier dans l'industrie, car il faut prendre des précautions d'utilisation dont la conservation sous atmosphère inerte... Enfin, les composés à base d'éléments de la colonne VIII du tableau périodique ont généralement des pressions de plateau élevées et forment des hydrures instables avec l'hydrogène. Il est donc apparu une demande pour des composés plus performants en terme d'absorption d'hydrogène.

Le composé intermétallique apte à absorber l'hydrogène selon l'invention vise à pallier les inconvénients des solutions de l'art antérieur, et en particulier à permettre l'absorption d'hydrogène au sein des fibres optiques par formation d'hydrures stables comportant une pression de plateau faible, et donc une meilleure capacité à minorer la présence d'hydrogène au sein des câbles à fibres optiques.

L'invention concerne donc une fibre optique, composée d'une partie guidante et d'une partie périphérique à la partie guidante, constituée d'au moins un revêtement de protection, comprenant, dans un revêtement extérieur à sa partie guidante, au moins un composé intermétallique formé d'au moins deux métaux. Le composé est cristallin et de la forme ABₓM_{y} où :
- A est constitué d'au moins un élément des colonnes IIa, IIIb ou IVb de la Classification Périodique des Eléments (version CAS),
- B est constitué d'au moins un élément des colonnes Vb, VIII ou IIIa de la Classification Périodique des Eléments (version CAS), et
- M contient au moins un élément des colonnes Vlb, Vllb, Ib ou IIb de la Classification Périodique des Eléments (version CAS),
avec: 0 ≤ x ≤ 10,
0 ≤ y ≤ 3 si A ne contient que des éléments de la colonne IIa, et
0,2 ≤ y ≤ 3 si A contient au moins un élément des colonnes IIIb ou IVb, et la pression de plateau lors de la formation d'hydrure est inférieure ou égale à 5.10⁻² atm ou 5,065.10⁻² Pa (1 atm = 1,013. 10⁵ Pa) mesuré à 30°C par un procédé PCT (acronyme de "Pressure Composition Temperature").

Ledit composé intermétallique cristallin, présent dans un revêtement extérieur à la partie guidante de la fibre, peut être incorporé dans la fibre optique de différentes façons, par exemple en étant incorporé à au moins un revêtement de ladite fibre.

L'invention concerne aussi un câble à fibre optique comprenant au moins une fibre optique, composée d'une partie guidante et d'une partie périphérique à la partie guidante, constituée d'au moins un revêtement de protection, comprenant, dans un revêtement extérieur à sa partie guidante, au moins un composé intermétallique formé d'au moins deux métaux.
Le composé est cristallin et de la forme ABₓM_{y} où :
- A est constitué d'au moins un élément des colonnes IIa, IIIb ou IVb de la Classification Périodique des Eléments (version CAS),
- B est constitué d'au moins un élément des colonnes Vb, VIII ou IIIa de la Classification Périodique des Eléments (version CAS), et
- M contient au moins un élément des colonnes Vlb, VIIb, Ib ou IIb de la Classification Périodique des Eléments (version CAS),
avec: 0 ≤ x ≤ 10,
0 ≤ y ≤ 3 si A ne contient que des éléments de la colonne IIa, et
0,2 ≤ y ≤ 3 si A contient au moins un élément des colonnes IIIb ou IVb,
et la pression de plateau lors de la formation d'hydrure est inférieure ou égale à 5.10⁻² atm ou 5,065.10⁻² Pa (1 atm = 1,0 13.10⁵ Pa) mesuré à 30°C par un procédé PCT (acronyme de "Pressure Composition Temperature").

Selon un mode de réalisation de l'invention, ledit composé intermétallique cristallin, qu'il soit présent dans une fibre optique ou dans un câble à fibre optique, est revêtu au moins partiellement par un dépôt métallique ayant pour effet de protéger ledit composé intermétallique de toute pollution par un gaz tel que par exemple l'oxygène O₂, le monoxyde de carbone CO ou le dioxyde de carbone CO₂, ledit gaz étant différent de l'hydrogène et permettant néanmoins la diffusion de l'hydrogène jusqu'audit composé intermétallique. Par exemple un tel dépôt métallique est un dépôt de nickel (Ni) ou de cuivre (Cu).

Ledit composé intermétallique cristallin peut être incorporé dans le câble à fibre optique de différentes façons, par exemple à une matrice, telle qu'un revêtement DSM 3471-2-102, au composé polymérique, tel qu'un Poly butylène téréphtalate Vestodur 3000 du tube de logement lorsque celui-ci est en matière polymère, à un gel de remplissage, tel qu'un gel Huber LA444 du câble, ou de toute autre façon accessible à l'homme du métier.

Avantageusement, un tel composé intermétallique cristallin présente une pression de plateau, qui fixe la pression partielle d'hydrogène résiduelle dans le câble, très basse, inférieure ou égale à 5.10⁻² atm, et donc une atténuation très faible. Un des avantages du composé intermétallique cristallin utilisé selon l'invention dans une fibre optique ou dans un câble à fibre optique est que, de préférence, le plateau de la pression d'équilibre est le plus plat possible afin de garder un niveau de performance le plus constant possible. Enfin, un autre des avantages dudit composé intermétallique cristallin est que, de préférence, sa capacité d'absorption est la plus forte possible afin d'augmenter au maximum la durée de vie du câble à fibre optique. Cette caractéristique est généralement donnée en H/M, H/ABxMy ou pourcentage pondéral.

Dans la suite, divers exemples de composés intermétalliques cristallins utilisables selon l'invention dans une fibre optique ou dans un câble à fibre optique sont donnés.

Un premier exemple de composé intermétallique cristallin utilisable selon l'invention est un alliage de type AB₅, au moins partiellement, c'est-à-dire partiellement ou totalement, substitué par M. Dans la famille des alliages de type AB₅, le plus connu est LaNi₅ qui a une pression de plateau de 1,7 atmosphère à 25°C, ce qui exclut ce composé du cadre de l'invention. La substitution du Ni par du Cr (colonne VIb) permet d'abaisser la pression de plateau à 0,04 atmosphère pour le composé LaNi₄Cr caractérisé à la même température ; et donc le composé intermétallique obtenu entre dans le cadre de l'invention. La substitution du Ni par du Mn (colonne VIIb) permet d'abaisser la pression de plateau à 0,02 atmosphère pour le composé LaNi₄Mn à 20°C ; et donc le composé intermétallique cristallin obtenu entre dans le cadre de l'invention.

Un deuxième exemple de composé intermétallique cristallin utilisable selon l'invention est un alliage de type AB_{2.} , au moins partiellement substitué par M. Dans la famille des alliages de type AB₂, ZrFe_{1.4}Cr_{0.6} a une pression de plateau de 3 atmosphères à 20°C, ce qui exclut ce composé du cadre de l'invention. Par contre, une totale substitution de Fe par Cr (colonne VIb) fait descendre la pression de plateau à 0,003 atmosphère à 25°C pour ZrCr₂ ; et donc le composé intermétallique cristallin obtenu entre dans le cadre de l'invention.

Un troisième exemple de composé intermétallique cristallin utilisable selon l'invention est un alliage de type AB, au moins partiellement substitué par M. Dans la famille des alliages de type AB, le TiFe a une pression de plateau de 5,2 atmosphères à 30°C, ce qui exclut ce composé du cadre de l'invention. Par contre, la substitution du Fe par Cu (colonne Ib) permet d'obtenir une pression de plateau de 0,00002 atmosphère à 25°C pour TiCu ; et donc le composé intermétallique cristallin obtenu entre dans le cadre de l'invention.

Un quatrième exemple de composé intermétallique cristallin utilisable selon l'invention est un alliage de type A₂B, au moins partiellement substitué par M. Dans la famille A₂B, les composés comme Zr₂Cu ou Ti₂Cu ont des pressions de plateau très inférieures à 0,1 atmosphère à des températures élevées (400°C-600°C). Or la pression de plateau diminue avec la température, ce qui donne une grande possibilité pour l'utilisation de ces composés dans le cadre de l'invention.

Tous les composés intermétalliques cristallins appartenant aux familles décrites ci-dessus entrent dans le cadre de l'invention. Néanmoins, une telle liste de composés n'est pas limitative. D'autres composés intermétalliques cristallins n'appartenant pas aux familles décrites ci-dessus peuvent être également proposés, comme Mg₅₁Zn₂₀ (MgZn_{0,39}), qui a une pression de plateau de 3.10⁻⁷ atmosphère à 25°C. De même des composés de type ABₓM_{y} sont envisageables dans le cadre de la présente invention.

En résumé, les composés intermétalliques cristallins du tableau suivant entrent dans le cadre de l'invention :

**Tableau**

| Formule du composé | A | B | M | x | y | Pression* (atm) |
|---|---|---|---|---|---|---|
| LaNi₄Cr | La (IIIb) | Ni (VIII) | Cr (VIb) | 4 | 1 | 0,04 |
| LaNi₄Mn | La (IIIb) | Ni (VIII) | Mn (VIIb) | 4 | 1 | 0,02 |
| ZrCr₂ | Zr (IVb) | | Cr (VIb) | 0 | 2 | 0,003 |
| TiCu | Ti (IVb) | | Cu (Ib) | 0 | 1 | 0,00002 |
| Zr₂Cu | Zr (IVb) | | Cu (Ib) | 0 | 0.5 | 0,003** |
| Ti₂Cu | Ti (IVb) | | Cu (Ib) | 0 | 0.5 | 0,02*** |
| Mg₅₁Zn₂₀ | Mg (IIa) | | Zn (IIb) | 0 | 0.39 | 3,10⁻⁷ |

| | | | | | | |
|---|---|---|---|---|---|---|
| * toutes les pressions sont données pour une température entre 20 et 30°C sauf : | | | | | | |
| ** à 600°C | | | | | | |
| *** à 500°C | | | | | | |

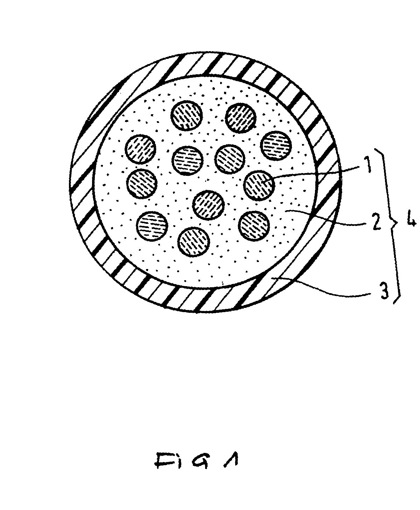

L'invention sera mieux comprise et d'autres caractéristiques et avantages apparaîtront à la lecture de la description qui va suivre, donnée à titre non limitatif, par référence à la figure 1.

La figure 1 représente une vue en coupe schématique simplifiée d'un câble unitube à fibre optique. Le câble 4 comprend une enveloppe extérieure qu'est un tube thermoplastique 3, et inclut des fibres optiques 1. Le tube 3 est rempli par un gel 2 de remplissage qui remplit l'espace autour des fibres optiques 1 à l'intérieur dudit tube 3.

### Exemples

Les exemples qui suivent illustrent l'invention, sans toutefois en limiter la portée.

### Exemple 1

Le composé intermétallique cristallin utilisé selon l'invention est incorporée au gel de remplissage (référence 2 sur la figure 1) placé à l'intérieur du tube. Ce gel peut être un gel commercial de type Huber LA444. La composition est telle que 5% de poudre de composé intermétallique, préalablement broyée, avec un diamètre moyen de 30 µm, est introduite dans le gel à l'aide d'un malaxeur à bras de Werner. Puis, l'ensemble gel et poudre de composé intermétallique est mis en place dans le câble.

### Exemple 2

Le composé intermétallique cristallin est incorporé au tube thermoplastique (référence 3 sur la figure 1). Le thermoplastique peut être, par exemple, du Polybutylène téréphtalate Vestodur 3000 sous forme de granulés et le composé intermétallique est sous forme de poudre de 30 *µ*m. Le mélange entre le thermoplastique et la poudre de composé intermétallique est réalisé à l'aide d'un mélangeur de type Brabender, éventuellement accompagné de lubrifiant pour atténuer l'effet d'abrasion du composé intermétallique et de tensioactifs. La composition est telle que 5% de composé intermétallique est introduite dans le thermoplastique avant l'extrusion de l'ensemble thermoplastique et composé intermétallique.

### Exemple 3

Le composé intermétallique cristallin est incorporé à un liant polymérique. Le liant polymérique peut être, par exemple, un revêtement DSM 3471-2-102. Le mélange liant polymérique et composé intermétallique est déposé autour de la fibre optique (référence 1 de la figure 1) en tant que revêtement secondaire de la fibre, à l'aide d'un procédé d'enduction. L'épaisseur de ce revêtement est de 30 µm et le diamètre moyen du composé intermétallique est de 5 µm. La composition est telle que 3% de composé intermétallique est introduite dans le liant polymérique avant le dépôt.

## Revendications

1. Fibre optique, composée d'une partie guidante et d'une partie périphérique à la partie guidante, constituée d'au moins un revêtement de protection, comprenant, dans un revêtement extérieur à sa partie guidante, au moins un composé intermétallique cristallin formé d'au moins deux métaux, **caractérisé en ce que** ledit composé est de la forme ABₓM_{y} où :
- A est constitué d'au moins un élément des colonnes IIa, IIIb ou IVb de la Classification Périodique des Eléments selon la version CAS,
- B est constitué d'au moins un élément des colonnes Vb, VIII ou IIIa de la Classification Périodique des Eléments selon la version CAS et
- M contient au moins un élément des colonnes Vlb, Vllb, Ib ou IIb de la Classification Périodique des Eléments selon la version CAS,
avec : 0 ≤ x ≤ 10
0 ≤ y ≤ 3 si A ne contient que des éléments de la colonne IIa, et
0,2 ≤ y ≤ 3 si A contient au moins un élément des colonnes IIIb ou IVb,
et dont la pression de plateau lors de la formation d'hydrure à 30 degrés Celsius est inférieure ou égale à 5.10⁻² atm.

2. Fibre selon la revendication 1 tel que ledit composé intermétallique cristallin est un alliage de type AB₅, au moins partiellement substitué par M.

3. Fibre selon la revendication 1 tel que ledit composé intermétallique cristallin est un alliage de type AB₂, au moins partiellement substitué par M.

4. Fibre selon la revendication 1 tel que ledit composé intermétallique cristallin est un alliage de type A₂B, au moins partiellement substitué par M.

5. Fibre selon la revendication 1 tel que ledit composé intermétallique cristallin est un alliage de type AB, au moins partiellement substitué par M.

6. Fibre selon l'une des revendications 1 à 5 tel que ledit composé intermétallique cristallin, présent dans un revêtement extérieur à la partie guidante de la fibre, est incorporé dans la fibre optique dans au moins un revêtement de ladite fibre.

7. Fibre selon l'une des revendications 1 à 6 tel que ledit composé intermétallique cristallin est revêtu au moins partiellement par un dépôt métallique ayant pour effet de protéger ledit composé intermétallique cristallin de toute pollution par un gaz tel que par exemple l'oxygène, le monoxyde de carbone ou le dioxyde de carbone, ledit gaz étant différent de l'hydrogène et permettant néanmoins la diffusion de l'hydrogène jusqu'audit composé intermétallique.

8. Fibre selon la revendication 7 tel que ledit composé intermétallique cristallin est revêtu par un dépôt de nickel ou de cuivre.

9. Câble à fibre optique (4) comprenant au moins une fibre optique (1), dont au moins un revêtement de protection (2, 3) comprend au moins un composé intermétallique formé d'au moins deux métaux, **caractérisé en ce que** ledit composé est cristallin, de la forme ABₓM_{y} où :
- A est constitué d'au moins un élément des colonnes IIa, IIIb ou IVb de la Classification Périodique des Eléments selon la version CAS,
- B est constitué d'au moins un élément des colonnes Vb, VIII ou IIIa de la Classification Périodique des Eléments selon la version CAS, et
- M contient au moins un élément des colonnes Vlb, VIIb, Ib ou IIb de la Classification Périodique des Eléments selon la version CAS,
avec : 0≤x≤ 10
0 ≤ y ≤ 3 si A ne contient que des éléments de la colonne IIa, et
0,2 ≤ y ≤ 3 si A contient au moins un élément des colonnes IIIb ou IVb,
et dont la pression de plateau lors de la formation d'hydrure à 30 degrés Celsius est inférieure ou égale à 5.10⁻² atm.

10. Câble selon la revendication 9 tel que ledit composé intermétallique cristallin est un alliage de type AB₅, au moins partiellement substitué par M.

11. Câble selon la revendication 9 tel que ledit composé intermétallique cristallin est un alliage de type AB₂, au moins partiellement substitué par M.

12. Câble selon la revendication 9 tel que ledit composé intermétallique cristallin est un alliage de type A₂B, au moins partiellement substitué par M.

13. Câble selon la revendication 9 tel que ledit composé intermétallique cristallin est un alliage de type AB, au moins partiellement substitué par M.

14. Câble selon l'une des revendications 9 à 13 tel que ledit composé intermétallique cristallin est revêtu au moins partiellement par un dépôt métallique ayant pour effet de protéger ledit composé intermétallique de toute pollution par un gaz tel que par exemple l'oxygène, le monoxyde de carbone ou le dioxyde de carbone, ledit gaz étant différent de l'hydrogène et permettant néanmoins la diffusion de l'hydrogène jusqu'audit composé intermétallique.

15. Câble selon la revendication 14 tel que ledit composé intermétallique cristallin est revêtu par un dépôt de nickel ou de cuivre.

16. Câble selon l'une des revendications 9 à 15 tel que ledit composé intermétallique cristallin est incorporé dans le câble à fibre optique par incorporation à une matrice.

17. Câble selon l'une des revendications 9 à 15 tel que ledit composé intermétallique cristallin est incorporé dans le câble à fibre optique au composé polymérique du tube de logement (3) lorsque celui-ci est en matière polymère.

18. Câble selon l'une des revendications 9 à 15 tel que ledit composé intermétallique cristallin est incorporé dans le câble à fibre optique à un gel de remplissage (2) du câble.

## Claims

1. Optical fibre comprising a guiding portion and a portion which is peripheral to the guiding portion and comprises at least one protective covering, and comprising, in a covering outside its guiding portion, at least one crystalline intermetallic compound composed of at least two metals, **characterised in that** said compound is of the form ABₓM_{y} wherein:
- A is composed of at least one element from groups IIa, IIIb and IVb of the periodic classification of elements according to the CAS version,
- B is composed of at least one element from groups Vb, VIII and IIIa of the periodic classification of elements according to the CAS version and
- M contains at least one element from groups Vlb, VIIb, Ib and IIb of the periodic classification of elements according to the CAS version, with:
0≤x≤10,
0 ≤ y ≤ 3 if A contains elements from group IIa only, and
0.2 ≤ y ≤ 3 if A contains at least one element from groups IIIb or IVb,
and wherein the plateau pressure during hydride formation at 30 degrees Celsius is less than or equal to 5 x 10⁻² atm.

2. Fibre according to claim 1, wherein said crystalline intermetallic compound is an alloy of the type AB₅ substituted at least in part by M.

3. Fibre according to claim 1, wherein said crystalline intermetallic compound is an alloy of the type AB₂ substituted at least in part by M.

4. Fibre according to claim 1, wherein said crystalline intermetallic compound is an alloy of the type A₂B substituted at least in part by M.

5. Fibre according to claim 1, wherein said crystalline intermetallic compound is an alloy of the type AB substituted at least in part by M.

6. Fibre according to one of claims 1 to 5, wherein said crystalline intermetallic compound, which is present in a covering outside the guiding portion of the fibre, is incorporated in the optical fibre in at least one covering of said fibre.

7. Fibre according to one of claims 1 to 6, wherein said crystalline intermetallic compound is coated at least in part with a metallic deposit having the effect of protecting said crystalline intermetallic compound from any pollution with a gas such as, for example, oxygen, carbon monoxide or carbon dioxide, said gas being other than hydrogen, but nevertheless allowing hydrogen to diffuse to said intermetallic compound.

8. Fibre according to claim 7, wherein said crystalline intermetallic compound is coated with a deposit of nickel or of copper.

9. Optical fibre cable (4) comprising at least one optical fibre (1) wherein at least one protective covering (2, 3) comprises at least one intermetallic compound composed of at least two metals, **characterised in that** said compound is crystalline and of the form ABₓM_{y} wherein:
- A is composed of at least one element from groups IIa, IIIb and IVb of the periodic classification of elements according to the CAS version,
- B is composed of at least one element from groups Vb, VIII and IIIa of the periodic classification of elements according to the CAS version and
- M contains at least one element from groups VIb, Vllb, Ib and IIb of the periodic classification of elements according to the CAS version, with:
0≤x≤10,
0 ≤ y ≤ 3 if A contains elements from group IIa only, and
0.2 ≤ y ≤ 3 if A contains at least one element from groups IIIb or IVb,
and wherein the plateau pressure during hydride formation at 30 degrees Celsius is less than or equal to 5 x 10⁻² atm.

10. Cable according to claim 9, wherein said crystalline intermetallic compound is an alloy of the type AB₅ substituted at least in part by M.

11. Cable according to claim 9, wherein said crystalline intermetallic compound is an alloy of the type AB₂ substituted at least in part by M.

12. Cable according to claim 9, wherein said crystalline intermetallic compound is an alloy of the type A₂B substituted at least in part by M.

13. Cable according to claim 9, wherein said crystalline intermetallic compound is an alloy of the type AB substituted at least in part by M.

14. Cable according to one of claims 9 to 13, wherein said crystalline intermetallic compound is coated at least in part with a metallic deposit having the effect of protecting said crystalline intermetallic compound from any pollution with a gas such as, for example, oxygen, carbon monoxide or carbon dioxide, said gas being other than hydrogen, but nevertheless allowing hydrogen to diffuse to said intermetallic compound.

15. Cable according to claim 14, wherein said crystalline intermetallic compound is coated with a deposit of nickel or of copper.

16. Cable according to one of claims 9 to 15, wherein said crystalline intermetallic compound is incorporated in the optical fibre cable by incorporation in a matrix.

17. Cable according to one of claims 9 to 15, wherein said crystalline intermetallic compound is incorporated in the optical fibre cable in the polymeric compound of the accommodating tube (3) when the latter is of polymeric material.

18. Cable according to one of claims 9 to 15, wherein said crystalline intermetallic compound is incorporated in the optical fibre cable in a filler gel (2) of the cable.

## Patentansprüche

1. Optische Faser, die aus einem Leitungsteil und einem zum Leitungsteil peripheren Teil besteht, der aus wenigstens einer Schutzummantelung besteht, die in einer Ummantelung außerhalb ihres Leitungsteils wenigstens eine kristalline intermetallische Zusammensetzung enthält, die aus wenigstens zwei Metallen gebildet wird, **dadurch gekennzeichnet, dass** die Zusammensetzung die Form ABₓM_{y} hat, wobei:
- A aus wenigstens einem Element der Gruppen IIa, IIIb oder IVb des Periodensystems der Elemente nach der CAS-Version besteht,
- B aus wenigstens einem Element der Gruppen Vb, VIII oder IIIa des Periodensystems der Elemente nach der CAS-Version besteht und
- M wenigstens ein Element der Gruppen VIb, VIIb, Ib oder IIb. des Periodensystems der Elemente nach der CAS-Version enthält, mit:
0≤x≤10
0≤y≤3, wenn A nur Elemente der Gruppe IIa enthält, und
0,2 ≤ y ≤ 3, wenn A wenigstens ein Element der Gruppen IIIb oder IVb enthält, und deren Bodendruck bei der Hydridbildung bei 30°C größer oder gleich 5·10⁻² atm. ist.

2. Faser nach Anspruch 1 der Art, dass die kristalline, intermetallische Zusammensetzung eine Legierung des Typs AB₅ ist, wenigstens teilweise substituiert mit M.

3. Faser nach Anspruch 1 der Art, dass die kristalline, intermetallische Zusammensetzung eine Legierung des Typs AB₂ ist, wenigstens teilweise substituiert mit M.

4. Faser nach Anspruch 1 der Art, dass die kristalline, intermetallische Zusammensetzung eine Legierung des Typs A₂B ist, wenigstens teilweise substituiert mit M.

5. Faser nach Anspruch 1 der Art, dass die kristalline, intermetallische Zusammensetzung eine Legierung des Typs AB ist, wenigstens teilweise substituiert mit M.

6. Faser nach einem der Ansprüche 1 bis 5 der Art, dass die kristalline, intermetallische Zusammensetzung, die in einer Ummantelung außerhalb des Leitungsteils der Faser vorhanden ist, in der optischen Faser in wenigstens einer Ummantelung der Faser aufgenommen ist.

7. Faser nach einem der Ansprüche 1 bis 6 der Art, dass die kristalline, intermetallische Zusammensetzung wenigstens teilweise mit einer Metallablagerung ummantelt ist, die die Wirkung hat, die kristalline, intermetallische Zusammensetzung vor jeglicher Verschmutzung durch Gas, wie z.B, Sauerstoff, Kohlenmonoxyd oder Kohlendioxyd, wobei das Gas von Wasserstoff verschieden ist, zu schützen, und die dennoch die Wasserstoffdiffusion bis zur intermetallischen Zusammensetzung hin gestattet.

8. Faser nach Anspruch 7 der Art, dass die kristalline intermetallische Zusammensetzung mit einer Nickel- oder Kupferablagerung ummantelt ist.

9. Kabel mit optischer Faser (4), das wenigstens eine optische Faser (1) umfasst, deren wenigstens eine Schutzumanantelung (2, 3) wenigstens eine aus wenigstens zwei Metallen gebildete intermetallische Zusammensetzung umfasst, **dadurch gekennzeichnet, dass** die Zusammensetzung kristallin ist und die Form ABₓM_{y} hat, wobei:
- A aus wenigstens einem Element der Gruppen IIa, IIIb oder IVb des Periodensystems der Elemente nach der CAS-Version besteht,
- B aus wenigstens einem Element der Gruppen Vb, VIII oder IIIa des Periodensystems der Elemente nach der CAS-Version besteht und
- M wenigstens ein Element der Gruppen VIb, VIIb, Ib oder IIb des Periodensystems der Elemente nach der CAS-Version enthält, mit:
0≤x≤10
0 ≤ y ≤ 3, wenn A nur Elemente der Gruppe IIa enthält, und
0,2 ≤ y ≤ 3, wenn A wenigstens ein Element der Gruppen IIIb oder IVb enthält, und deren Bodendruck bei der Hydridbildung bei 30°C größer oder gleich 5·10⁻² atm. ist.

10. Kabel nach Anspruch 9 der Art, dass die kristalline, intermetallische Zusammensetzung eine Legierung des Typs AB₅ ist, wenigstens teilweise substituiert mit M.

11. Kabel nach Anspruch 9 der Art, dass die kristalline, intermetallische Zusammensetzung eine Legierung des Typs AB₂ ist, wenigstens teilweise substituiert mit M.

12. Kabel nach Anspruch 9 der Art, dass die kristalline, intermetallische Zusammensetzung eine Legierung des Typs A₂B ist, wenigstens teilweise substituiert mit M.

13. Kabel nach Anspruch 9 der Art, dass die kristalline, intermetallische Zusammensetzung eine Legierung des Typs AB ist, wenigstens teilweise substituiert mit M.

14. Kabel nach einem der Ansprüche 9 bis 13 der Art, dass die kristalline, intermetallische Zusammensetzung wenigstens teilweise mit einer Metallablagerung ummantelt ist, die die Wirkung hat, die intermetallische Zusammensetzung vor jeglicher Verschmutzung durch Gas, wie z.B, Sauerstoff, Kohlenmonoxyd oder Kohlendioxyd, wobei das Gas von Wasserstoff verschieden ist, zu schützen, und die dennoch die Wasserstoffdiffusion bis zur intermetallischen Zusammensetzung hin gestattet.

15. Kabel nach Anspruch 14 der Art, dass die kristalline intermetallische Zusammensetzung mit einer Nickel- oder Kupferablagerung ummantelt ist.

16. Kabel nach einem der Ansprüche 9 bis 15 der Art, dass die kristalline, intermetallische Zusammensetzung in dem Kabel mit optischer Faser durch Aufnahme in eine Matrix aufgenommen ist.

17. Kabel nach einem der Ansprüche 9 bis 15 der Art, dass die kristalline, intermetallische Zusammensetzung in dem Kabel mit optischer Faser in eine Polymerzusammensetzung des Aufnahmerohrs (3) aufgenommen ist, wenn dieses aus Polymermaterial besteht.

18. Kabel nach einem der Ansprüche 9 bis 15 der Art, dass die kristalline, intermetallische Zusammensetzung in dem Kabel mit optischer Faser in einem Füllgel (2) des Kabels aufgenommen ist.
